# EUROPEAN PATENT SPECIFICATION

(11) **EP 4 146 928 B1**
(45) Date of publication and mention of the grant of the patent: **01.05.2024**
(21) Application number: 21726981.0
(22) Date of filing: 30.04.2021
(51) Int. Cl.: F03B 17/06

(54) **HYDRODYNAMIC TURBINE ROTOR**
HYDRODYNAMISCHER TURBINENROTOR
ROTOR DE TURBINE HYDRODYNAMIQUE

(30) Priority: 05.05.2020 IT 202000009916
(43) Date of publication of application: 15.03.2023
(73) Proprietor: He-Powergreen S.r.l., 38122 Trento (TN) (IT)
(72) Inventor: BATTISTI, Lorenzo, 38122 Trento (TN) (IT); SORAPERRA, Giuseppe, 38036 Pozza Di Fassa (TN) (IT)
(74) Representative: Metroconsult Srl
(86) International application number: PCT/IB2021/053627
(87) International publication number: WO 2021/224740

(56) References cited:
- WO-A1-2009/151181
- WO-A2-2011/162498
- US-A1- 2011 042 962
- US-A1- 2012 119 499
- US-A1- 2017 145 985

## Description

### Field of the invention

The present invention relates, in general, to the field of electric energy production. In particular, the present invention relates to a hydrodynamic turbine.

### Background art

As is known, energy production from renewable sources is now playing a central role on the international scene. Recently, the European Commission has launched a plan for the so-called "Green Deal", i.e. a gradual reduction in environmentally harmful emissions until climate neutrality is achieved by 2050.

As is known, one of the most used renewable sources is hydroelectric energy.

Hydroelectric energy is an energy source obtained, for example, by exploiting the water flow of a river and/or an artificial channel, which is suitably conveyed towards a hydrodynamic turbine. Said hydrodynamic turbine transforms the kinetic energy of the water flow into electric energy.

The Applicant has observed that natural and/or artificial watercourses may have, along their path, different sections. In particular, each section may be characterized by different geometries of the wet perimeter and different local speeds of the water flow.

Disadvantageously, such differences among different watercourses and/or among different sections of a single watercourse require a dedicated design phase for each turbine to be installed.

Disadvantageously, each section of a watercourse may require turbines having a different diameter, height and/or number of blades.

The Applicant has noted that designing and manufacturing a specific rotor in order to optimize the production of electric energy and/or the specific cost per kilowatt-hour result in increased production costs.

Document US 2017/0145985 A1 discloses a hydrokinetic turbine with configurable blades for bi-directional rotation.

### Summary of the invention

It is the object of the present invention to provide a hydrodynamic turbine rotor that overcomes the above-mentioned problems.

According to a first aspect, the present invention aims at providing a hydrodynamic turbine according to claim 1.

### Brief description of the drawings

The present invention will become apparent in light of the following detailed description, supplied by way of non-limiting example with reference to the annexed drawings, wherein:
- Figures 1a and 1b show two illustrative configurations of a hydrodynamic turbine rotor not according to the present invention;
- Figures 2a and 2b show further illustrative configurations of the hydrodynamic turbine rotor not according to the present invention;
- Figure 3 shows a blade according to one embodiment of the present invention;
- Figures 4a and 4b are cross-sectional views along plane H-H of the blade according to some embodiments of the present invention;
- Figure 5 shows a first connection system connecting the blades to a rotation shaft not according to the present invention;
- Figure 6 is a sectional view along plane A-A of the first connection system shown in Figure 4;
- Figures 7a and 7b show a second connection system connecting the blades to a rotation shaft according to a further embodiment of the present invention;
- Figures 8a and 8b are sectional views along plane B-B of the second connection system shown in Figure 7a.
- Figure 9 shows a hydrodynamic turbine according to one embodiment of the present invention;
- Figure 10 shows an electric energy generation system according to the present invention.

The Figures are not in scale.

### Detailed description of some embodiments

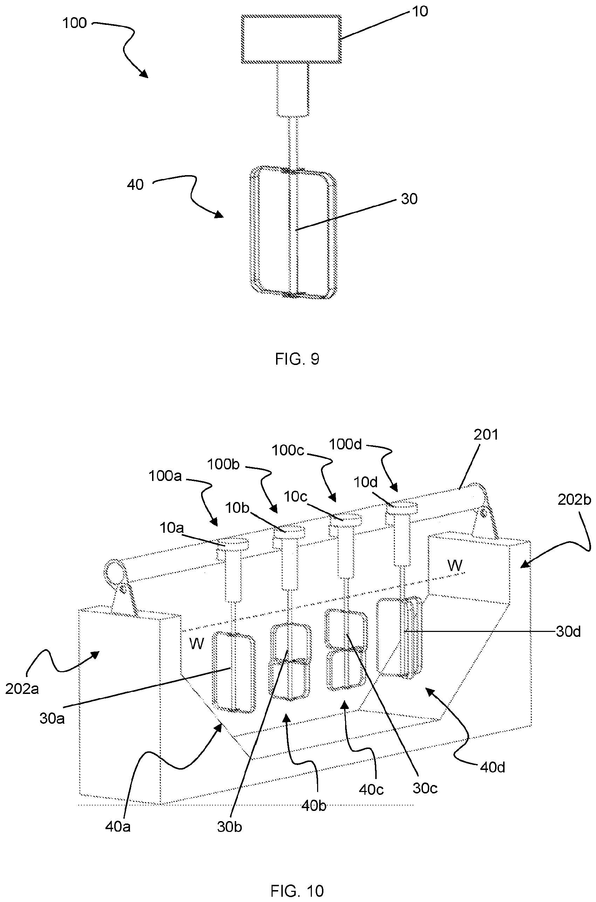

With reference to Figure 9, the present invention provides a hydrodynamic turbine 100 comprising:
- an electric energy generator 10;
- a rotor 40;
- a rotation shaft 30.

The rotation shaft 30 extends longitudinally and has a first portion and a second portion. In particular, the first portion of the rotation shaft 30 is coupled to the rotor 40; the second portion of the rotation shaft 30 is coupled to the electric energy generator 10.

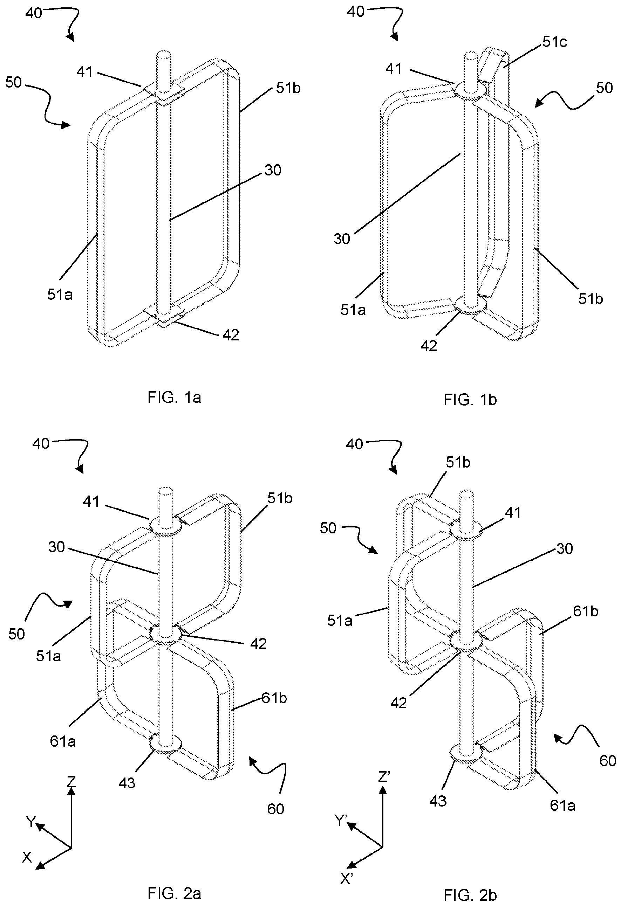

With reference to Figures 1a and 1b, the rotor 40 comprises a first connection system 41 and a second connection system 42.

In particular, the first connection system 41 and the second connection system 42 are integrally engaged with the rotation shaft 30.

The rotor 40 comprises a first blade module 50.

In particular, the first blade module 50 comprises at least two blades 51a, 51b. Each blade 51a, 51b of the first blade module 50 is equipped with a first end and a second end.

As will be further described hereinafter, each blade 51a, 51b of the first blade module 50 comprises a respective inner cavity 73 having a substantially rectangular cross-section.

According to the present invention, each connection system 41, 42 comprises a plurality of elongate engagement elements 84, 92.

Each elongate engagement element 84, 92 has a substantially rectangular cross-section.

Preferably, the inner cavity 73 of each blade 51a, 51b of the first blade module 50 has a substantially rectangular cross-section with radiused angles.

Preferably, each elongate engagement element 84, 92 has a substantially rectangular cross-section with radiused angles.

According to the present invention, each elongate engagement element 84, 92 is coupled to the cavity 73 of a respective blade 51a, 51b of the first blade module 50.

In particular, each blade 51a, 51b of the first blade module 50 is coupled, at a first end thereof, to the first connection system 41 and, at a second end thereof, to the second connection system 42.

Preferably, with reference to Figures 2a and 2b, the rotor 40 comprises a third connection system 43.

Preferably, the third connection system 43 is integrally engaged with the rotation shaft 30.

Preferably, the rotor 40 comprises a second blade module 60.

Preferably, the second blade module 60 comprises at least two blades 61a, 61b.

In particular, each blade 61a, 61b of the second blade module 60 is equipped with a first end and a second end. Each blade 61a, 61b of the second blade module 60 comprises a respective inner cavity 73 having a substantially rectangular cross-section; preferably, such respective inner cavity 73 has radiused angles.

Preferably, the third connection system 43 comprises a plurality of elongate engagement elements 84, 92 having a substantially rectangular cross-section.

Preferably, such elongate engagement element 84, 92 of the third connection system 43 have a substantially rectangular cross-section with radiused angles.

Preferably, each elongate engagement element 84, 92 of the third connection system is coupled to the cavity 73 of a respective blade 61a, 61b of the second blade module 60.

In particular, each blade 61a, 61b of the second blade module 60 is coupled, at a first end thereof, to the second connection system 42 and, at a second end thereof, to the third connection system 43.

Preferably, the first connection system 41, the second connection system 42 and the third connection system 43 are positioned on the rotation shaft 30 at a predetermined distance.

In other words, the distance between the first connection system 41 and the second connection system 42 is preferably equal to the distance between the second connection system 42 and the third connection system 43 when they are engaged with the rotation shaft 30.

The following will describe some illustrative embodiments of the rotor 40 according to the present invention.

With reference to Figure 1a, the rotor 40 comprises: the first blade 51a; the second blade 51b; the first connection system 41; and the second connection system 42.

In particular, the first connection system 41 is positioned along the rotation shaft 30; the second connection system 42 is positioned at the free end of the rotation shaft 30.

Preferably, the first blade 51a and the second blade 51b are coupled to the first connection system 41 and to the second connection system 42, and are positioned in such a way as to form an angle of 180° between themselves.

With reference to the illustrative embodiment shown in Figure 1b, the rotor 40 further comprises a third blade 51c. In particular, the third blade 51c is coupled to the first connection system 41 and to the second connection system 42.

Preferably, the first blade 51a, the second blade 51b and the third blade 51c are coupled to the first and second connection systems 41, 42 in such a way as to form an angle of 120° between two adjacent blades.

In other words, the first blade 51a, the second blade 51b and the third blade 51c are so arranged as to form a mutual angle of 120°.

With reference to the illustrative embodiment shown in Figure 2a, the rotor 40 comprises:
- the first blade module 50 and the second blade module 60;
- the first connection system 41, the second connection system 42 and the third connection system 43.

Preferably, the first blade module 50 comprises two blades 51a, 51b; the second blade module 60 comprises two blades 61a, 61b.

Preferably, the two blades 51a, 51b of the first blade module 50 are coupled, at a first end thereof (i.e. the upper end) to the first connection system 41 and, at a second end thereof (i.e. the lower end) to the second connection system 42.

Preferably, the two blades 61a, 61b of the second blade module 60 are coupled, at a first end thereof (i.e. the upper end) to the second connection system 42 and, at a second end thereof (i.e. the lower end) to the third connection system 43.

Preferably, the two blades 51a, 51b of the first blade module 50 and the rotation shaft 30 lie in a first plane X-Z.

Preferably, the two blades 61a, 61b of the second blade module 60 and the rotation shaft 30 lie in a second plane Y-Z.

Even more preferably, the first plane X-Z and the second plane Y-Z are perpendicular to each other.

Preferably, with reference to the illustrative embodiment shown in Figure 2b, the second blade 51b of the first blade module 50, the first blade 61a of the second blade module 60 and the rotation shaft 30 lie in a third plane Y'-Z'.

Preferably, the first blade 51a of the first blade module 50, the second blade 61b of the second blade module 60 and the rotation shaft 30 lie in a fourth plane X'-Z'.

Even more preferably, the third plane Y'-Z' and the fourth plane X'-Z' are perpendicular to each other.

In the following, each blade belonging to the first blade module 50 or to the second blade module 60 will be generally designated by reference numeral 70.

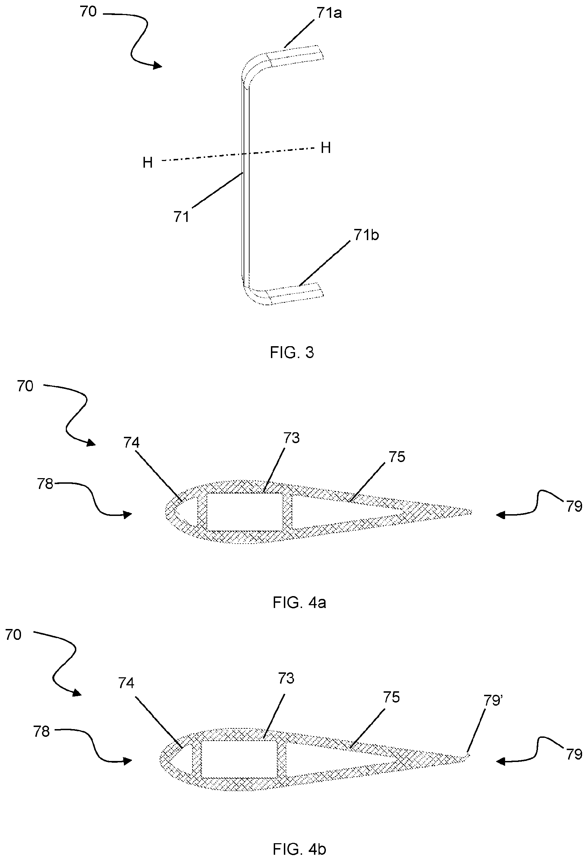

With reference to Figure 3, each blade 70 of at least one of the first blade module 50 and the second blade module 60 preferably comprises, respectively:
- a main tract 71 parallel to said rotation shaft 30; and
- two connection tracts 71a, 71b.

It should be noted that the first end of a respective blade 70 corresponds to the free end of the first connection tract 71a; the second end of a respective blade 70 corresponds to the free end of the second connection tract 71b.

Preferably, each connection tract 71a, 71b engages a respective connection system 41, 42, 43.

For example, the main tract 71 has a length of 1 to 4 meters.

For example, the two connection tracts 71a, 71b have a length of 0.7 to 2 meters.

Preferably, such two connection tracts 71a, 71b are arranged transversally, and even more preferably perpendicularly, to the rotation shaft 30.

As aforementioned, with reference to Figure 4a, each blade 70 of the first blade module 50 and/or of the second blade module 60 is equipped with a respective inner cavity 73 having a substantially rectangular cross-section.

Preferably, each inner cavity 73 has radiused angles.

Preferably, each blade 70 comprises a front cavity 74 and a rear cavity 75. In particular, the front cavity 74 and the rear cavity 75 have a substantially triangular cross-section.

It should be noted that each blade 70 preferably has a hydrodynamic profile and comprises a head portion 78 and a tail portion 79.

Optionally, each blade 70 is equipped with a Gurney flap 79' at its tail portion 79 (Figure 4b).

In particular, such Gurney flaps 79' form an angle of 45° relative to the outer surface of the blade 70.

Preferably, each blade 70 of the first blade module 50 and each blade 70 of the second blade module 60 are substantially equal.

Preferably, each blade 70 of the first blade module 50 and/or of the second blade module 60 is made as one piece.

For example, each blade 70 of the first blade module 50 and/or of the second blade module 60 is made by means of an extrusion process.

In particular, by means of the extrusion process it is possible, after having made a suitable template, to obtain a rod (not shown) with a substantially longitudinal development and internally equipped with a cavity (i.e. the above-described inner cavity 73). Preferably, such rod is also equipped with a cavity with longitudinal development formed in the front part (i.e. the front cavity 74) and a cavity with longitudinal development formed in the rear part (i.e. the rear cavity 75).

Once appropriately bent and cut, such rod forms each blade 70 of the first blade module 50 and/or of the second blade module 60.

Preferably, each blade 70 of the first blade module 50 and/or of the second blade module 60 is made of aluminium. As an alternative, other extrudable alloys may also be considered.

Optionally, the rotor 40 comprises a plurality of safety cords (not shown in the drawing), each safety cord being associated with a respective blade. In particular, each safety cord crosses a cavity 73, 74, 75 of a respective blade 70.

Preferably, each safety cord is engaged, at its ends, with two respective connection systems 41, 42, 43.

For example, with reference to the first connection system 41 and the second connection system 42, and considering a generic blade 70 coupled thereto, the safety cord of the blade 70 is positioned in the inner cavity 73 of the blade 70 and engaged, at a first end thereof, with an elongate engagement element 84, 92 of the first connection system 41 and, at a second end thereof, with an elongate engagement element 84, 92 of the second connection system 42.

Preferably, each safety cord is made of Kevlar or steel.

Advantageously, each safety cord permits retaining the respective blade 70 on the rotation shaft 30, e.g. should a blade 70 break after a collision with a floating body.

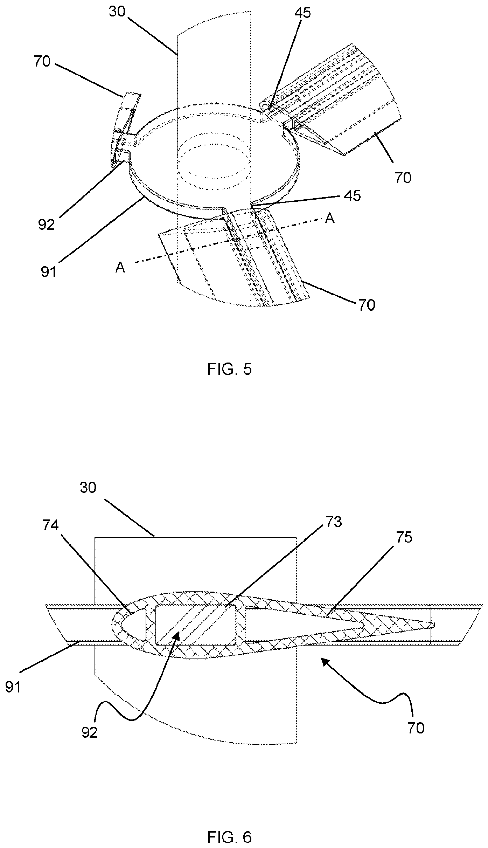

With reference to Figure 5, according to one embodiment of the present invention at least one of said connection systems 41, 42, 43 comprises a connection flange 91.

Preferably, each elongate engagement element is a protrusion 92. In particular, each protrusion 92 extends in the outward radial direction from said connection flange 91.

Preferably, each protrusion 92 has a substantially rectangular cross-section; even more preferably, said substantially rectangular cross-section has radiused angles.

Preferably, said radial direction is substantially orthogonal to the longitudinal extension of the rotation shaft 30.

Preferably, each protrusion 92 is inserted, at least partly, into the inner cavity 73 at a respective end of a respective blade 70.

Preferably, each connection flange 91 is integrally engaged with the rotation shaft 30. In particular, each connection flange 91 is fitted onto the rotation shaft 30.

As shown in Figure 5, each connection flange 91 comprises at least two protrusions 92.

Preferably, each end of a respective blade 70 of the first blade module 50 and/or of the second blade module 60 is coupled to a respective protrusion 92 by means of a glue. For example, such glue may be applied onto the protrusions 92 of each connection flange 91.

According to a variant of the present invention, at least one of said connection systems 41, 42, 43 comprises a sandwich structure 80.

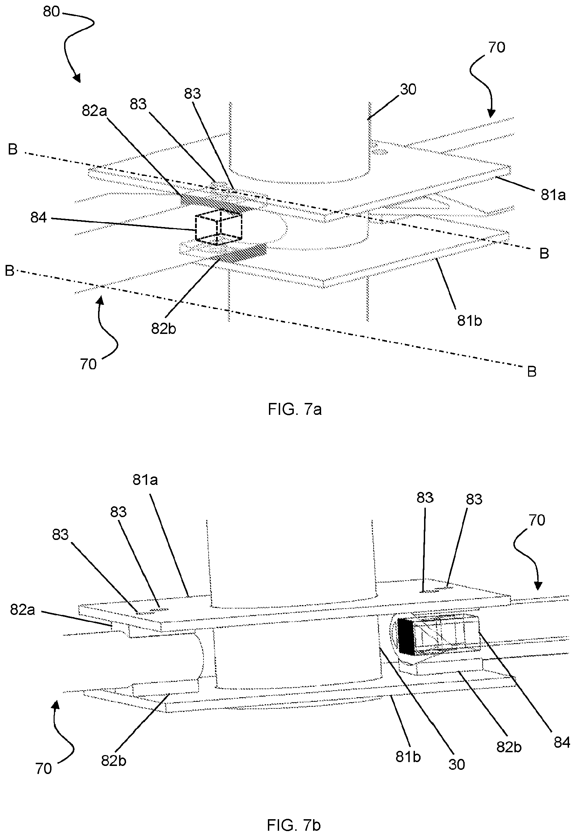

With reference to Figure 7a and 7b, each sandwich structure 80 comprises:
- a pair of tightening plates 81a, 81b fitted onto the rotation shaft 30; and
- a pair of coupling shims 82a, 82b.

Preferably, each elongate engagement element is a rectangular shim 84.

Preferably, such rectangular shim 84 is inserted into the inner cavity 73 at a respective end of a respective blade 70.

Preferably, said end of a respective blade 70 and said rectangular shim 84 are interposed between the pair of coupling shims 82a, 82b and the pair of tightening plates 81a, 81b, as will be described in detail below.

Preferably, each tightening plate 81a, 81b is made of steel.

Preferably, each coupling shim 82a, 82b has a first surface and a second surface, opposite to said first surface. In particular, said first surface is substantially flat and said second surface is substantially concave.

Preferably, each coupling shim 82a, 82b is made of aluminium.

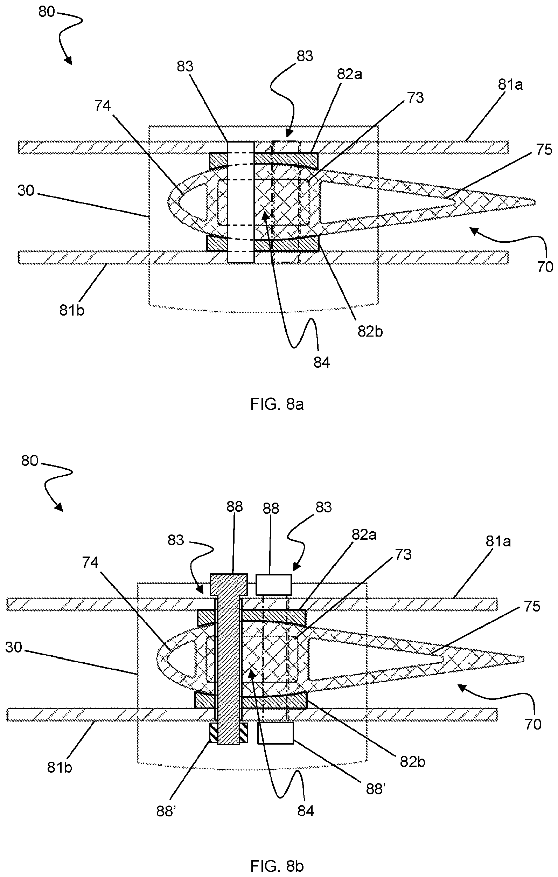

With reference to Figures 8a and 8b, the sandwich structure 80 preferably comprises at least two tightening screws 88 and at least two tightening seats 83.

Preferably, each tightening screw 88 is inserted into a suitable tightening seat 83 and locked, for example, by means of a respective nut 88'.

Preferably, each tightening seat 83 crosses, from top to bottom, the first tightening plate 82a, the first coupling shim 82a, a respective blade 70, the rectangular shim 84, the second coupling shim 82b and the second tightening plate 82b.

In other words, each first tightening plate 82a, each first coupling shim 82a, each rectangular shim 84, each second coupling shim 82b and each second tightening plate 82b of a sandwich structure 80 are equipped with at least two through holes. Moreover, each blade 70 engaged with a sandwich structure 80 has at least two through holes at the end thereof which is to be engaged with said sandwich structure 80. Such holes form the at least two tightening seats 83.

Preferably, each tightening seat 83 is parallel to the rotation shaft 30.

Preferably, at least two of such tightening seats 83 are arranged at different distances from the rotation shaft 30.

With reference to Figure 8a, it should be noted that:
- the first tightening plate 81a is coupled to the first surface (i.e. the substantially flat surface) of the first coupling shim 82a;
- the second surface (i.e. the substantially concave surface) of the first coupling shim 82a is coupled to a first side of the blade 70;
- the second surface (i.e. the substantially concave surface) of the second coupling shim 82b is coupled to a second side of the blade 70, opposite to the first side;
- the second tightening plate 81b is coupled to the first surface (i.e. the substantially flat surface) of the second coupling shim 82b.

In other words, the concave surface of each coupling shim 82a, 82b faces towards a respective blade 70.

According to the present invention, as shown in Figure 10, an electric energy generation system 200 is provided.

The electric energy generation system 200 comprises:
- a plurality of hydrodynamic turbines 100a, 100b, 100c, 100d as described above;
- a crossbar 201, having a first end and a second end.

Such plurality of hydrodynamic turbines 100a, 100b, 100c, 100d are engaged with the crossbar 201. In particular, the plurality of hydrodynamic turbines 100a, 100b, 100c, 100d are engaged with the crossbar 201 and are arranged in such a way that the rotation shafts 30a, 30b, 30c, 30b of said hydrodynamic turbines 100a, 100b, 100c, 100d are substantially parallel to one another.

Preferably, each rotation shaft 30a, 30b, 30c, 30b is orthogonal to the crossbar 201.

Preferably, the rotors 40a, 40b, 40c, 40d are all equal; Figure 10 shows different rotors for the sole purpose of illustrating different options.

According to a further aspect of the present invention, a method for generating electric energy is provided.

Preferably, the method according to the invention comprises the following steps:
- providing the electric energy generation system 200;
- fixing the first and second ends of the crossbar 201 on opposite sides 202a, 202b of an artificial water channel 202, so that at least the rotors 40a, 40b, 40c, 40d of each hydrodynamic turbine 100a, 100b, 100c, 100d are submerged in water.

Preferably, the electric energy generators 10a, 10b, 10c, 10d of each hydrodynamic turbine 100a, 100b, 100c, 100d are located above the water level W.

Preferably, the crossbar 201 is substantially orthogonal to the direction of the water flow.

As aforementioned, the rotors 40a, 40b, 40c, 40d of each hydrodynamic turbine 100a, 100b, 100c, 100d are partially submerged in water. Such rotors 40a, 40b, 40c, 40d are made to rotate, by the forces exerted on the respective blades 70 by the water flow, about the longitudinal axis of the respective rotation shaft 30a, 30b, 30c, 30b. By turning they produce, in co-operation with the respective electric energy generator 10a, 10b, 10c, 10d, electric energy.

The generation of electric energy by means of a hydrodynamic turbine is known and will not be described in detail herein.

The present invention offers important advantages.

In particular, it is advantageously possible to make rotors having blades 70 of different length (i.e. the sum of the length of the main tract 71 and the length of the connection tracts 71a, 71b) without having to modify the blade production process.

In fact, advantageously, the blades can be created by varying the length of the main tract 71 and/or of each connection tract 71a, 71b by simply changing the bending of the rod made, for example, by extrusion.

Such bending is advantageously facilitated by the presence of the inner cavity 73, which also permits coupling each blade 70 to two respective connection systems 41, 42, 43, as previously described.

As described above, said substantially rectangular inner cavity 73 makes it possible to couple each blade 70 to a rotation shaft 30 by means of:
- the connection flange 91; or
- the sandwich structure 80.

Advantageously, such connection systems permit reducing the fatigue deterioration of the rotor 40.

## Claims

1. A hydrodynamic turbine (100) comprising:
- an electric energy generator (10);
- a rotor (40);
- a rotation shaft (30), said rotation shaft having a first end and a second end;
- said first end of said rotation shaft (30) being engaged with said rotor (40);
- said second end of said rotation shaft (30) being coupled to said electric energy generator (10);
wherein said rotor (40) comprises:
- a first connection system (41) and a second connection system (42), each connection system (41, 42) being integrally engaged with said rotation shaft (30);
- a first blade module (50) comprising at least two blades (51a, 51b), each blade (51a, 51b) comprising an inner cavity (73) having a substantially rectangular cross-section and being equipped with a first end and a second end;
wherein each of the first and second connection systems (41, 42) comprises a plurality of elongate engagement elements (84, 92) having a substantially rectangular cross-section; each elongate engagement element (84, 92) being coupled to the cavity (73) of a respective blade (51a, 51b);
wherein each blade (51a, 51b) of said first blade module (50) is coupled, at a first end thereof, to said first connection system (41) and, at a second end thereof, to said second connection system (42)
wherein at least one of said first and second connection systems (41, 42) comprises a sandwich structure (80); said sandwich structure (80) comprising:
- a pair of tightening plates (81a, 81b) fitted onto said rotation shaft (30);
- a pair of coupling shims (82a, 82b);
wherein each elongate engagement element is a rectangular shim (84);
wherein said rectangular shim (84) is inserted into said inner cavity (73) at a respective end of a respective blade (70);
wherein said end of a respective blade (70) and said rectangular shim (84) are interposed between said pair of coupling shims (82a, 82b) and said pair of tightening plates (81a, 81b).

2. The hydrodynamic turbine (100) according to claim 1, wherein said rotor (40) comprises:
- a third connection system (43), said third connection system (43) being integrally engaged with said rotation shaft (30);
- a second blade module (60) comprising at least two blades (61a, 61b), each blade (61a, 61b) of said second blade module (60) comprising an inner cavity (73) having a substantially rectangular cross-section and being equipped with a first end and a second end;
wherein said third connection system (43) comprises a plurality of elongate engagement elements (84, 92) having a substantially rectangular cross-section; each elongate engagement element (84, 92) being coupled to said cavity (73) of a respective blade (61a, 61b) of said second blade module (60);
wherein each blade (61a, 61b) of said second blade module (60) is coupled, at a first end thereof, to said second connection system (42) and, at a second end thereof, to said third connection system (43).

3. The hydrodynamic turbine according to any one of the preceding claims, wherein each blade (70) of at least one of said first blade module (50) and said second blade module (60) comprises, respectively:
- a first tract (71) parallel to said rotation shaft;
- two connection tracts (71a, 71b), which engage a respective connection system (41, 42, 43);
wherein said two connection tracts (71a, 71b) are arranged transversally, preferably perpendicularly, to said rotation shaft (30).

4. The hydrodynamic turbine (100) according to any one of the preceding claims 2 or 3,
wherein said first blade module (50) comprises two blades (51a, 51b) and said second blade module (60) comprises two blades (61a, 61b);
wherein said two blades (51a, 51b) of said first blade module (50) and said rotation shaft (30) lie in a first plane (X-Z);
wherein said two blades (61a, 61b) of said second blade module (60) and said rotation shaft (30) lie in a second plane (Y-Z);
wherein said first plane (X-Z) and said second plane (Y-Z) are perpendicular to each other.

5. The hydrodynamic turbine (100) according to any one of claims 2 or 3,
wherein said first blade module (50) comprises a first blade (51a) and a second blade (51b);
said second blade module (60) comprises a first blade (61a) and a second blade (61b);
wherein said second blade (51b) of said first blade module (50), said first blade (61a) of said second blade module (60) and said rotation shaft (30) lie in a third plane (Y'-Z');
wherein said first blade (51a) of said first blade module (50), said second blade (61b) of said second blade module (60) and said rotation shaft (30) lie in a fourth plane (X'-Z');
wherein said third plane (Y'-Z') and said fourth plane (X'-Z') are perpendicular to each other.

6. The hydrodynamic turbine (100) according to any one of the preceding claims, wherein each blade (70) is made of aluminium.

7. The hydrodynamic turbine (100) according to any one of the preceding claims, wherein each blade (70) has a hydrodynamic profile and comprises a head portion (78) and a tail portion (79), said tail portion comprising a Gurney flap (79').

8. An electric energy generation system (200) comprising:
- a plurality of hydrodynamic turbines (100a, 100b, 100c, 100d) according to any one of the preceding claims;
- a crossbar (201);
wherein said plurality of hydrodynamic turbines (100a, 100b, 100c, 100d) are engaged with said crossbar (201) and arranged in such a way that the rotation shafts (30a, 30b, 30c, 30b) of said plurality of hydrodynamic turbines (100a, 100b, 100c, 100d) are substantially parallel to one another.

9. A method for generating electric energy, comprising:
- providing an electric energy generation system (200) according to the preceding claim, said crossbar having a first end and a second end;
- fixing said first and second ends of said crossbar on opposite sides of an artificial water channel (202), so that the rotors (40a, 40b, 40c, 40d) of each hydrodynamic turbine (100a, 100b, 100c, 100d) are submerged in water.

## Patentansprüche

1. Hydrodynamische Turbine (100), umfassend:
- einen Elektroenergieerzeuger (10);
- einen Rotor (40);
- eine Drehwelle (30), wobei die Drehwelle ein erstes Ende und ein zweites Ende aufweist;
- das erste Ende der Drehwelle (30) mit dem Rotor (40) in Eingriff steht;
- das zweite Ende der Drehwelle (30) mit dem Elektroenergieerzeuger (10) gekoppelt ist;
wobei der Rotor (40) umfasst:
- ein erstes Verbindungssystem (41) und ein zweites Verbindungssystem (42), wobei jedes Verbindungssystem (41, 42) ganzheitlich mit der Drehwelle (30) in Eingriff steht;
- ein erstes Schaufelmodul (50), das mindestens zwei Schaufeln (51a, 51b) umfasst, wobei jede Schaufel (51a, 51b) einen Innenhohlraum (73) umfasst, der einen im Wesentlichen rechteckigen Querschnitt aufweist und mit einem ersten Ende und einem zweiten Ende ausgestattet ist;
wobei jedes des ersten und des zweiten Verbindungssystems (41, 42) eine Mehrzahl von länglichen Eingriffselementen (84, 92) mit einem im Wesentlichen rechteckigen Querschnitt umfasst; wobei jedes längliche Eingriffselement (84, 92) mit dem Hohlraum (73) einer jeweiligen Schaufel (51a, 51b) gekoppelt ist;
wobei jede Schaufel (51a, 51b) des ersten Schaufelmoduls (50) an einem ersten Ende davon mit dem ersten Verbindungssystem (41) und an einem zweiten Ende davon mit dem zweiten Verbindungssystem (42) gekoppelt ist,
wobei mindestens eines des ersten und des zweiten Verbindungssystems (41, 42) eine Sandwichstruktur (80) umfasst; wobei die Sandwichstruktur (80) umfasst:
- ein Paar von Klemmplatten (81a, 81b), das auf der Drehwelle (30) angebracht ist;
- ein Paar von Kopplungsscheiben (82a, 82b);
wobei jedes längliche Eingriffselement eine rechteckige Zwischenscheibe (84) ist;
wobei die rechteckige Zwischenscheibe (84) an einem jeweiligen Ende einer jeweiligen Schaufel (70) in den Innenhohlraum (73) eingeführt ist;
wobei das Ende einer jeweiligen Schaufel (70) und die rechteckige Zwischenscheibe (84) zwischen das Paar von Kopplungsscheiben (82a, 82b) und das Paar von Klemmplatten (81a, 81b) eingefügt sind.

2. Hydrodynamische Turbine (100) nach Anspruch 1, wobei der Rotor (40) umfasst:
- ein drittes Verbindungssystem (43), wobei das dritte Verbindungssystem (43) ganzheitlich mit der Drehwelle (30) in Eingriff steht;
- ein zweites Schaufelmodul (60), das mindestens zwei Schaufeln (61a, 61b) umfasst, wobei jede Schaufel (61a, 61b) des zweiten Schaufelmoduls (60) einen Innenhohlraum (73) umfasst, der einen im Wesentlichen rechteckigen Querschnitt aufweist und mit einem ersten Ende und einem zweiten Ende ausgestattet ist;
wobei das dritte Verbindungssystem (43) eine Mehrzahl von länglichen Eingriffselementen (84, 92) mit einem im Wesentlichen rechteckigen Querschnitt umfasst; wobei jedes längliche Eingriffselement (84, 92) mit dem Hohlraum (73) einer jeweiligen Schaufel (61a, 61b) des zweiten Schaufelmoduls (60) gekoppelt ist;
wobei jede Schaufel (61a, 61b) des zweiten Schaufelmoduls (60) an einem ersten Ende davon mit dem zweiten Verbindungssystem (42) und an einem zweiten Ende davon mit dem dritten Verbindungssystem (43) gekoppelt ist.

3. Hydrodynamische Turbine (100) nach einem der vorhergehenden Ansprüche, wobei jede Schaufel (70) von mindestens einem des ersten Schaufelmoduls (50) bzw. des zweiten Schaufelmoduls (60) umfasst:
- einen ersten Trakt (71) parallel zur Drehwelle;
- zwei Verbindungstrakte (71a, 71b), die in ein jeweiliges Verbindungssystem (41, 42, 43) eingreifen;
wobei die Verbindungstrakte (71a, 71b) quer, vorzugsweise senkrecht zur Drehwelle (30) angeordnet sind.

4. Hydrodynamische Turbine (100) nach einem der vorhergehenden Ansprüche 2 oder 3,
wobei das erste Schaufelmodul (50) zwei Schaufeln (51a, 51b) umfasst und das zweite Schaufelmodul (60) zwei Schaufeln (61a, 61b) umfasst;
wobei die beiden Schaufeln (51a, 51b) des ersten Schaufelmoduls (50) und die Drehwelle (30) in einer ersten Ebene (X-Z) liegen;
wobei die beiden Schaufeln (61a, 61b) des zweiten Schaufelmoduls (60) und die Drehwelle (30) in einer zweiten Ebene (Y-Z) liegen;
wobei die erste Ebene (X-Z) und die zweite Ebene (Y-Z) senkrecht zueinander sind.

5. Hydrodynamische Turbine (100) nach einem der Ansprüche 2 oder 3,
wobei das erste Schaufelmodul (50) eine erste Schaufel (51a) und eine zweite Schaufel (51b) umfasst;
das zweite Schaufelmodul (60) eine erste Schaufel (61a) und eine zweite Schaufel (61b) umfasst;
wobei die zweite Schaufel (51b) des ersten Schaufelmodus (50), die erste Schaufel (61a) des zweiten Schaufelmoduls (60) und die Drehwelle (30) in einer dritten Ebene (Y'-Z') liegen;
wobei die erste Schaufel (51a) des ersten Schaufelmodus (50), die zweite Schaufel (61b) des zweiten Schaufelmoduls (60) und die Drehwelle (30) in einer vierten Ebene (X'-Z') liegen;
wobei die dritte Ebene (Y'-Z') und die vierte Ebene (X'-Z') senkrecht zueinander sind.

6. Hydrodynamische Turbine (100) nach einem der vorhergehenden Ansprüche, wobei jede Schaufel (70) aus Aluminium hergestellt ist.

7. Hydrodynamische Turbine (100) nach einem der vorhergehenden Ansprüche, wobei jede Schaufel (70) ein hydrodynamisches Profil aufweist und einen Kopfabschnitt (78) und einen Endabschnitt (79) umfasst, wobei der Endabschnitt (79) eine Gurney-Klappe (79') umfasst.

8. Elektroenergieerzeugungssystem (200), umfassend:
- eine Mehrzahl von hydrodynamischen Turbinen (100a, 100b, 100c, 100d) nach einem der vorhergehenden Ansprüche;
- eine Querstange (201);
wobei die Mehrzahl von hydrodynamischen Turbinen (100a, 100b, 100c, 100d) mit der Querstange (201) in Eingriff steht und so angeordnet ist, dass die Drehwellen (30a, 30b, 30c, 30b) der Mehrzahl von hydrodynamischen Turbinen (100a, 100b, 100c, 100d) im Wesentlichen parallel zueinander sind.

9. Verfahren zur Erzeugung von elektrischer Energie, umfassend:
- Bereitstellen eines Elektroenergieerzeugungssystems (200) nach dem vorhergehenden Anspruch, wobei die Querstange ein erstes Ende und ein zweites Ende aufweist;
- Anbringen des ersten und des zweiten Endes der Querstange auf gegenüberliegenden Seiten eines künstlichen Wasserkanals (202), sodass die Rotoren (40a, 40b, 40c, 40d) jeder hydrodynamischen Turbine (100a, 100b, 100c, 100d) in Wasser getaucht sind.

## Revendications

1. Turbine hydrodynamique (100) comprenant :
- un générateur d'énergie électrique (10) ;
- un rotor (40) ;
- un arbre de rotation (30), ledit arbre de rotation ayant une première extrémité et une seconde extrémité ;
- ladite première extrémité dudit arbre de rotation (30) étant engagée avec ledit rotor (40) ;
- ladite seconde extrémité dudit arbre de rotation (30) étant couplée audit générateur d'énergie électrique (10) ;
dans laquelle ledit rotor (40) comprend :
- un premier système de liaison (41) et un deuxième système de liaison (42), chaque système de liaison (41, 42) étant intégralement engagé avec ledit arbre de rotation (30) ;
- un premier module de pales (50) comprenant au moins deux pales (51a, 51b), chaque pale (51a, 51b) comprenant une cavité interne (73) ayant une section transversale sensiblement rectangulaire et étant équipée d'une première extrémité et d'une seconde extrémité ;
dans laquelle chacun des premier et deuxième systèmes de liaison (41, 42) comprend une pluralité d'éléments d'engagement allongés (84, 92) ayant une section transversale sensiblement rectangulaire ; chaque élément d'engagement allongé (84, 92) étant couplé à la cavité (73) d'une pale respective (51a, 51b) ;
dans laquelle chaque pale (51a, 51b) dudit premier module de pales (50) est couplée, au niveau d'une première extrémité de celle-ci, audit premier système de liaison (41) et, au niveau d'une seconde extrémité de celle-ci, audit deuxième système de liaison (42)
dans laquelle au moins l'un desdits premier et deuxième systèmes de liaison (41, 42) comprend une structure sandwich (80) ; ladite structure sandwich (80) comprenant :
- une paire de plaques de serrage (81a, 81b) montées sur ledit arbre de rotation (30) ;
- une paire de cales d'accouplement (82a, 82b) ;
dans laquelle chaque élément d'engagement allongé est une cale rectangulaire (84) ;
dans laquelle ladite cale rectangulaire (84) est insérée dans ladite cavité interne (73) au niveau d'une extrémité respective d'une pale respective (70) ;
dans laquelle ladite extrémité d'une pale respective (70) et ladite cale rectangulaire (84) sont interposées entre ladite paire de cales d'accouplement (82a, 82b) et ladite paire de plaques de serrage (81a, 81b).

2. Turbine hydrodynamique (100) selon la revendication 1, dans laquelle ledit rotor (40) comprend :
- un troisième système de liaison (43), ledit troisième système de liaison (43) étant intégralement engagé avec ledit arbre de rotation (30) ;
- un second module de pales (60) comprenant au moins deux pales (61a, 61b), chaque pale (61a, 61b) dudit second module de pales (60) comprenant une cavité interne (73) ayant une section transversale sensiblement rectangulaire et étant équipée d'une première extrémité et d'une seconde extrémité ;
dans laquelle ledit troisième système de liaison (43) comprend une pluralité d'éléments d'engagement allongés (84, 92) ayant une section transversale sensiblement rectangulaire ; chaque élément d'engagement allongé (84, 92) étant couplé à ladite cavité (73) d'une pale respective (61a, 61b) dudit second module de pales (60) ;
dans laquelle chaque pale (61a, 61b) dudit second module de pales (60) est couplée, au niveau d'une première extrémité de celle-ci, audit deuxième système de liaison (42) et, au niveau d'une seconde extrémité de celle-ci, audit troisième système de liaison (43).

3. Turbine hydrodynamique selon l'une quelconque des revendications précédentes, dans laquelle chaque pale (70) d'au moins l'un dudit premier module de pales (50) et dudit second module de pales (60) comprend respectivement :
- une première voie (71) parallèle audit arbre de rotation ;
- deux voies de liaison (71a, 71b), qui s'engagent avec un système de liaison respectif (41, 42, 43) ;
dans laquelle lesdites deux voies de liaison (71a, 71b) sont agencées transversalement, de préférence perpendiculairement, audit arbre de rotation (30).

4. Turbine hydrodynamique (100) selon l'une quelconque des revendications précédentes 2 et 3, dans laquelle ledit premier module de pales (50) comprend deux pales (51a, 51b) et ledit second module de pales (60) comprend deux pales (61a, 61b) ;
dans laquelle lesdites deux pales (51a, 51b) dudit premier module de pales (50) et ledit arbre de rotation (30) se trouvent dans un premier plan (X-Z) ;
dans laquelle lesdites deux pales (61a, 61b) dudit second module de pales (60) et ledit arbre de rotation (30) se trouvent dans un deuxième plan (Y-Z) ;
dans laquelle ledit premier plan (X-Z) et ledit deuxième plan (Y-Z) sont perpendiculaires l'un à l'autre.

5. Turbine hydrodynamique (100) selon l'une quelconque des revendications 2 et 3, dans laquelle ledit premier module de pales (50) comprend une première pale (51a) et une deuxième pale (51b) ;
ledit second module de pales (60) comprend une première pale (61a) et une deuxième pale (61b) ;
dans laquelle ladite deuxième pale (51b) dudit premier module de pales (50), ladite première pale (61a) dudit second module de pales (60) et ledit arbre de rotation (30) se trouvent dans un troisième plan (Y'-Z') ;
dans laquelle ladite première pale (51a) dudit premier module de pales (50), ladite deuxième pale (61b) dudit second module de pales (60) et ledit arbre de rotation (30) se trouvent dans un quatrième plan (X'-Z') ;
dans laquelle ledit troisième plan (Y'-Z') et ledit quatrième plan (X'-Z') sont perpendiculaires l'un à l'autre.

6. Turbine hydrodynamique (100) selon l'une quelconque des revendications précédentes, dans laquelle chaque pale (70) est réalisée en aluminium.

7. Turbine hydrodynamique (100) selon l'une quelconque des revendications précédentes, dans laquelle chaque pale (70) a un profil hydrodynamique et comprend une partie de tête (78) et une partie arrière (79), ladite partie arrière comprenant un volet de Gurney (79').

8. Système de génération d'énergie électrique (200) comprenant :
- une pluralité de turbines hydrodynamiques (100a, 100b, 100c, 100d) selon l'une quelconque des revendications précédentes ;
- une barre transversale (201) ;
dans lequel ladite pluralité de turbines hydrodynamiques (100a, 100b, 100c, 100d) sont engagées avec ladite barre transversale (201) et agencées de manière à ce que les arbres de rotation (30a, 30b, 30c, 30b) de ladite pluralité de turbines hydrodynamiques (100a, 100b, 100c, 100d) soient sensiblement parallèles entre eux.

9. Procédé pour générer de l'énergie électrique, comprenant :
- la fourniture d'un système de génération d'énergie électrique (200) selon la revendication précédente, ladite barre transversale ayant une première extrémité et une seconde extrémité ;
- la fixation desdites première et seconde extrémités de ladite barre transversale sur des côtés opposés d'un canal d'eau artificiel (202), de sorte que les rotors (40a, 40b, 40c, 40d) de chaque turbine hydrodynamique (100a, 100b, 100c, 100d) soient immergés dans l'eau.
